# EUROPÄISCHE PATENTSCHRIFT

(11) **EP 1 099 506 B1**
(45) Veröffentlichungstag und Bekanntmachung des Hinweises auf die Patenterteilung: **02.06.2004**
(21) Anmeldenummer: 99122600.2
(22) Anmeldetag: 12.11.1999
(51) Int. Cl.: B23K 26/03

(54) **Verfahren und Vorrichtung zur Messung von Prozessparametern eines Materialbearbeitungsprozesses**
Method and device for measuring process parameters of a material machining process
Méthode et dispositif de mesure de paramètres d'un procédé d'usinage de matériaux

(43) Veröffentlichungstag der Anmeldung: 16.05.2001
(73) Patentinhaber: Kluft, Werner, D-52078 Aachen (DE)
(72) Erfinder: Beersiek, Jörg, 6351 AP Bocholtz (NL); Kluft, Werner, 52078 Aachen (DE)
(74) Vertreter: Dallmeyer, Georg, Dipl.-Ing.

(56) Entgegenhaltungen:
- DE-A- 4 106 008
- DE-A- 19 716 293
- US-A- 5 138 458
- US-A- 5 463 202
- US-A- 5 581 078
- US-A- 5 938 953

## Beschreibung

Die Erfindung betrifft ein Verfahren bzw. eine Vorrichtung zur Messung von Prozeßparametern eines Materialbearbeitungsprozesses nach dem Oberbegriff des Anspruchs 1 bzw. 13.

Hochenergiestrahlen, insbesondere Laserstrahlen werden in unterschiedlichster Weise zur Materialbearbeitung eingesetzt, beispielsweise zum Schneiden, Bohren und Schweißen unterschiedlichster Materialien und Werkstückgeometrien. Allen Verfahren ist gemeinsam, daß zur Bearbeitung das Werkstück aufgeschmolzen und/oder teilweise verdampft wird. Die Überführung des bearbeiteten Materials in unterschiedliche Aggregatzustände macht diese Bearbeitungsprozesse häufig anfällig für Materialfehler und Prozeßänderungen. Insbesondere Prozesse, in denen alle drei Aggregatzustände des Materials, fest, flüssig und dampfförmig durchlaufen werden, werden durch eine Vielzahl von Prozeßparametern beeinflußt.

Beim Laserstrahlschweißen sind die Prozeßparameter, die die Nahtgeometrie beeinflussen, nachstehend beispielhaft angegeben:
- Nahtvorbereitung:
   z.B. Kantenvorbeitung, Materialpaarung, Stoßart
- Prozeßführung:
   z.B. Verwendung eines Zusatzdrahtes, Vorschubgeschwindigkeit, Schutz- bzw. Arbeitsgas
- Eigenschaften der Bearbeitungseinrichtung:
   z.B. Führung des Laserstrahls, Fokussieroptik, Reproduzierbarkeit der Schweißbahn
- Prozeßparameter der Lasereinrichtung:
   z.B. Laserleistung, Stabilität der Laserleistung, Strahlqualität.

Darüber hinaus verlangt die Entwicklung im Automobilbau immer komplexere Bearbeitungsgeometrien, die eine Führung der Hochenergiestrahlung notwendig macht.

Um eine reproduzierbare Bearbeitungsqualität zu garantieren, ist eine Online-Überwachung des Bearbeitungsprozesses erforderlich, in der relevante Prozeßparameter gemessen werden und zur Steuerung bzw. Regelung des Materialbearbeitungsprozesses herangezogen werden.

Aus der DE 197 41 329 C ist ein Verfahren und eine Vorrichtung zur Materialbearbeitung mit plasmainduzierter Hochenergiestrahlung bekannt, bei dem der Bereich der Dampfkapillare zur Steuerung und Überwachung des Bearbeitungsprozesses beispielsweise mit einer CCD-Kamera überwacht wird. Dabei ist vorgesehen, den Bereich der Dampfkapillaren an mindestens zwei Meßstellen zu untersuchen, um unterschiedliche Kapillargeometriegrößen zu erfassen. Zur Auswertung werden demzufolge bestimmte Bildbereiche des von der CCD-Kamera übertragenen Bildes zur Bestimmung der Kapillargeometriegrößen ausgewertet. Da zunächst die gesamten Bilddaten der Auswerteeinrichtung zugeführt werden müssen, ist eine Messung mit hoher Überwachungsfrequenz nicht möglich. Desweiteren erlaubt das bekannte verfahren nicht die Untersuchung des Umfeldes der Dampfkapillaren, so daß weitere voneinander unabhängige Überwachungs- und Steuerungssysteme erforderlich sind, um eine optimierte Prozeßführung zu ermöglichen.

Die DE 41 06 008 A betrifft ein Verfahren zur Online-Überwachung bei der Werkstückbearbeitung mit Laserstrahlung. Dabei wird das aus dem Bereich um die mit Laserstrahlung beaufschlagte Bearbeitungsstelle herum emittierte Licht unter Nutzung mit einer mit einer Fokussiereinrichtung ausgestatteten Strahlführungseinrichtung und mittels eines Strahlteilers ausgewertet. Dabei werden die Teilstrahlen des Strahlteilers von Fokussiereinrichtungen zu zwei im Winkel zueinanderstehenden Linien gebündelt. Dabei wird eine Datenreduktion durch Bildzeilen bzw. bildspaltenweise Integration mit optischen mitteln erzielt.

Der Erfindung liegt demzufolge die Aufgabe zugrunde, ein Verfahren und eine Vorrichtung der eingangs genannten Art zu schaffen, die die gleichzeitige Erfassung mehrerer Prozeßparameter mit einer einzigen Überwachungseinrichtung und mit einer hohen Überwachungsfrequenz zu ermöglichen.

Zur Lösung dieser Aufgabe dienen die Merkmale des Anspruchs 1 bzw. 13.

Die Erfindung sieht in vorteilhafter Weise vor, daß ein optischer Sensor mit einem Dynamikbereich über 70 dB verwendet wird. Ein derartiger Sensor ist in der Lage, gleichzeitig den Bereich der Dampfkapillaren, die die Dampfkapillare umgebende Schmelzzone und ggf. auch eine die Schmelzzone umgebende Randzone simultan zu erfassen und erlaubt die Auswertung der Meßsignale trotz des hohen Kontrastumfangs des erzeugten Bildes. Dadurch ist es möglich, Meßsignale von unterschiedlichen Ausschnitten des Bildfeldes zur Bestimmung der Prozeßparameter simultan auszuwerten. Da nur die Meßsignale von Ausschnitten des Bildfeldes der Auswerteeinrichtung zugeführt werden, kann eine hohe Überwachungsfrequenz von über 1 kHz erreicht werden, da die zur Auswertung gelangende Meßsignaldatenmenge gering gehalten wird.

In dem von dem optischen Sensor erfaßten Bildfeld werden vorzugsweise unterschiedliche Bildausschnitte frei wählbar festgelegt, wobei ausschließlich die Meßsignale dieser Bildausschnitte simultan zur Bestimmung unterschiedlicher zu überwachender Prozeßparameter verwertet werden.

Die freie Wählbarkeit der Bildausschnitte ermöglicht ein Höchstmaß an Flexibilität bei der Einrichtung eines Überwachungssystems. Die Beobachtung bestimmter Bereiche der Schmelzzone ist insofern von großer Bedeutung, da die Schmelze von der heißeren Region um die Dampfkapillare herum zum entfernteren Ende der Schmelzzone getrieben wird. Dort kühlt sich dieser Bereich ab und erstarrt schließlich. Dabei erfolgt offensichtlich ein unregelmäßiger Transport heißen Materials, der die Erstarrung der Schmelze beeinflußt und zu Unregelmäßigkeiten und Fehlern in der resultierenden Schweißnaht führen kann. Eine Beobachtung der Erstarrungsfront am Ende der Schmelzzone ist daher für eine Überwachung von Fehlern, die mit der Erstarrung des Materials zusammenhängen, z.B. Oberflächenrauhigkeit, Nahtüberhöhungen, Löcher, Oberflächenporen u.s.w., wesentlich. Die Überwachung dieser Fehler wäre allein mit der Überwachung der Dampfkapillaren nicht möglich.

Meßsignale von Bildausschnitten im Bereich der Schmelzzone vor und seitlich der Dampfkapillaren können zur Überwachung von Nahtvorbereitungsfehlern verwendet werden.

Meßsignale eines Bildausschnittes in Arbeitsrichtung vor der Bearbeitungszone im Bereich der Schmelzzone oder in dem der Schmelzzone vorgelagerten Randbereich können zur Messung der Nahtlage und zur Steuerung der Laserposition oder Werkstückposition verwendet werden. Eine Kombination der Kapilarüberwachung, der Schmelzzonenüberwachung und der Nahtverfolgung hat für den Anwender den Vorteil, daß alle Überwachungs- und Steuerungsfunktionen mit einem einzigen Überwachungs- und Steuerungssystem durchgeführt werden können, wobei gleichzeitig die Bedienung der Steuerung vereinfacht wird.

Die Eindringtiefe des Hochenergiestrahls kann aus einer reduzierten Anzahl von Bildpixeln eines Bildausschnitts im Zentrum der Dampkapillaren ermittelt werden.

Die Meßsignale eines Bildausschnittes in Bearbeitungsrichtung hinter der Dampfkapillaren in der Schmelzzone und/oder in Bearbeitungsrichtung in einem Randbereich hinter der Schmelzzone kann zur Messung der Oberflächentopographie des bearbeiteten Werkstücks verwendet werden.

Für spezielle Überwachungsaufgaben ist es möglich, in dem Strahlengang zu dem optischen Sensor einen Filter vorzusehen, mit dem Licht vorbestimmter Wellenlängen ausgefiltert werden kann.

Als optischer Sensor wird bevorzugt eine CMOS-Kamera verwendet. Die CMOS-Technologie ermöglicht es, Bildpixel des Bildfeldes unabhängig von dem Gesamtbild auszuwerten, wodurch in vorteilhafter Weise die Anzahl der zu verarbeitenden Meßsignaldaten auf ein Mindestmaß reduziert werden kann. Es ist nicht erforderlich, alle Meßsignaldaten zunächst aufzunehmen und erst anschließend selektiv auszuwerten. Auf diese Weise ist eine hohe Überwachungsfrequenz bis über 1 kHz möglich.

Dabei wird vorzugsweise ein optischer Sensor mit einem Dynamikbereich von über 100 dB verwendet.

Die Fokussierposition des Hochenergiestrahls kann durch Messung der Lichtintensitätänderung in einem linienförmigen oder rechteckförmigen Bildausschnitt bestimmt werden, der linear durch die Dampfkapillare und die benachbarten beiderseitigen Schmelzzonen verläuft.

Weitere vorteilhafte Merkmale der Erfindung sind den Unteransprüchen zu entnehmen.

Im folgenden werden unter Bezugnahme auf die Zeichnungen Ausführungsbeispiele der Erfindung näher erläutert:

Es zeigen:
- Fig. 1: eine schematische Darstellung einer erfindungsgemäßen vorrichtung,
- Fig. 2: das von einer CMOS-Kamera erzeugte Bildfeld mit ausgewählten Bildausschnitten,
- Fig. 3: ein Beispiel für die Bestimmung der Fokuslage eines Laserlichtstrahls, und
- Fig. 4: Beispiele unterschiedlicher Bearbeitungsfehler.

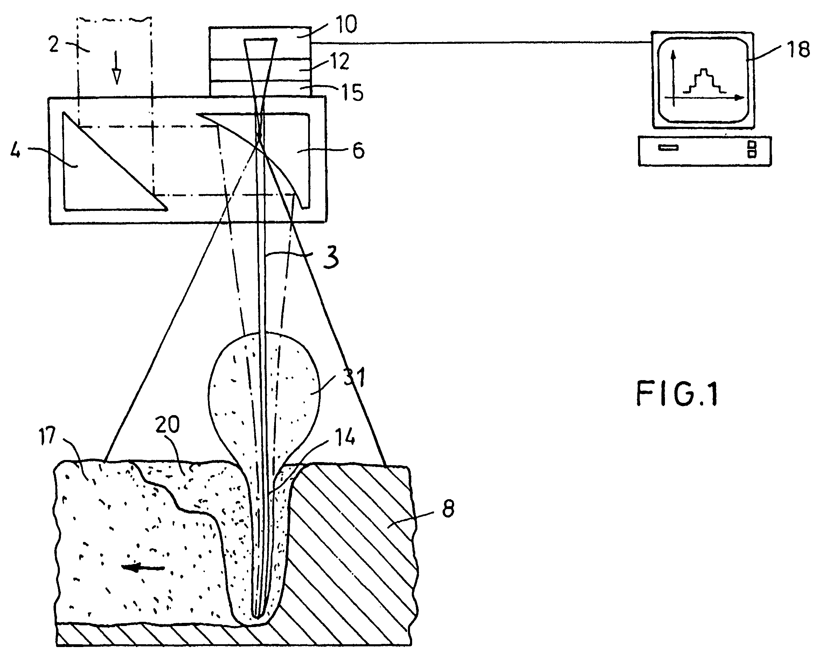

Fig. 1 zeigt die Bearbeitung eines Werkstücks 8 mit einem Laserstrahl 2, der mit Hilfe eines Umlenkspiegels 4 und eines Fokussierspiegels 6 auf das Werkstück 8 fokussiert wird. Oberhalb des Fokussierspiegels 6 ist eine CMOS-Kamera 10 mit einer Optik 12 angeordnet, die durch den Fokussierspiegel 6 hindurch koaxial zu dem fokussierten Laserlichtstrahl 2 die Bearbeitungszone des Werkstücks 8 beobachtet. Hierzu kann der Fokussierspiegel 6 eine entsprechende Perforation für den Strahlendurchgang aufweisen oder ist für die untersuchten Lichtwellenlängen zumindest teilweise durchlässig. In der Zeichnung ist schematisch der Meßstrahl 3 innerhalb des Meßkegels der CMOS-Kamera 10 dargestellt, mit dem die in dem Werkstück 8 erzeugte Dampfkapillare 14 hinsichtlich der emittierten Lichtintensität abgetastet wird. Die Dampfkapillare 14 entsteht durch Erhitzen und Verdampfen des Materials des Werkstücks 8 und bildet eine räumliche Vertiefung in dem Werkstück 8, deren Kapillargeometriegrößen mit Hilfe der CMOS-Kamera 10 und einer Auswerteeinrichtung 18 zwecks Prozeßsteuerung oder Prozeßregelung verwertet werden. Über den Strahlengang 3 hinaus erfaßt der Meßkegel der CMOS-Kamera ein Bildfeld, das nicht nur die Dampfkapillare 14 enthält, sondern darüber hinaus die die Dampfkapillare 14 umgebende Schmelzzone 20 und einen Randbereich jenseits der Schmelzzone 20 im Vorfeld der Bearbeitung und im Bereich der Schweißnaht 17. Die in Fig. 1 dargestellte Plasmawolke 31 ist für die vorgesehenen Messungen durchsichtig.

Wie in Fig. 1 ersichtlich, ist bei der schematischen Darstellung vorausgesetzt, daß das Werkstück 8 relativ zu dem Hochenergiestrahl 2 in Richtung des Pfeils bewegt wird. Selbstverständlich kann das Werkstück 8 auch feststehend sein und die Einrichtung zum Erzeugen von Hochenergiestrahlen, z.B. eine Lasereinrichtung, bewegt werden.

Zwischen der CMOS-Kamera 10 und dem Umlenkspiegel 6 kann ein Filter 15 angeordnet sein, wenn bestimmte Lichtwellenlängen von der Messung ausgeschlossen werden sollen.

Die CMOS-Kamera 10 weist einen Dynamikbereich von ca. 120 dB auf, so daß simultan sowohl die Gasphase als auch die Schmelzphase und ggf. auch die feste Phase eines Werkstücks 6 während der Bearbeitung meßtechnisch beobachtet werden kann.

Die CMOS-Technologie ermöglicht es, einzelne Bildpixel unabhängig von den Gesamtinformationen des Bildfeldes auszuwerten, so daß lediglich bestimmte frei wählbare Bildausschnitte innerhalb des von der Kamera abgetasteten Bildfeldes und des von der Kamera erzeugten Bildes der Verwertung durch die Auswerteeinrichtung 18 zugeführt werden. Um on-line eine Überwachungsfrequenz von mindestens 1 kHz alle zur Überwachung und Steuerung notwendigen Prozeßgrößen zu ermitteln und auszuwerten, wird eine Datenreduktion vorgenommen. Dies geschieht anhand von spezifischen Merkmalen, die für die entsprechenden Prozeßgrößen charakteristisch sind.

Z.B. kann die Eindringtiefe des Laserstrahls 2 in das Werkstück 8 anhand von wenigen Bildpixeln ermittelt werden, auf die die Strahlung aus dem Zentrum der Dampfkapillaren 14 abgebildet wird.

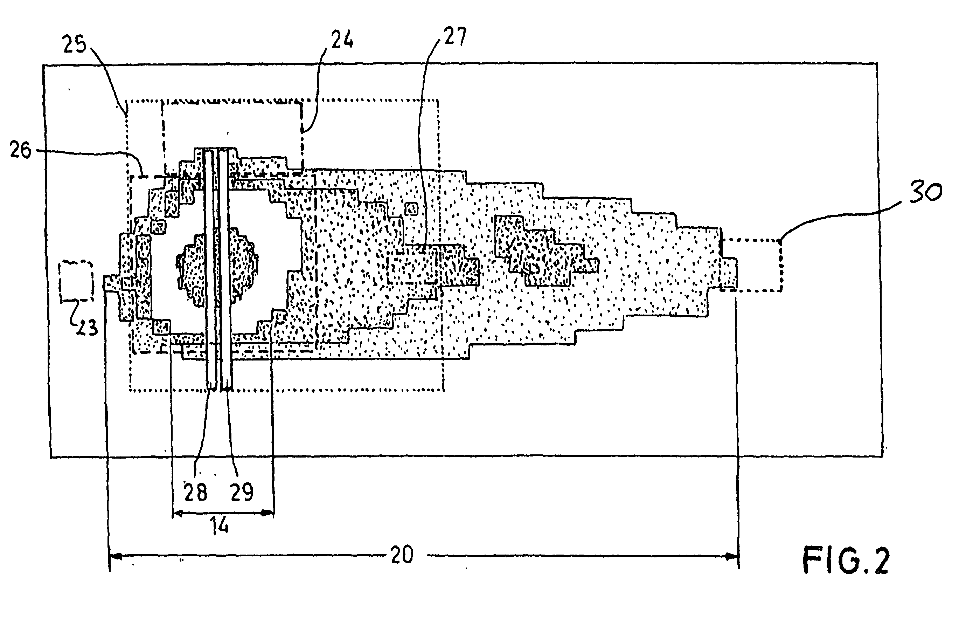

Fig. 2 zeigt das von der CMOS-Kamera 10 überwachte Bildfeld, das den Bereich der Dampfkapillaren 14, den Bereich der Schmelzzone 20 und den die Schmelzzone 20 umgebenden Randbereich einschließt. In dem Bild sind deutlich die dampfförmigen, flüssigen und erstarrten Bereiche unterscheidbar. Im Bereich der Dampfkapillaren 14 kann, wie am besten Fig. 1 ersichtlich ist, auch eine Plasmawolke 31 vorhanden sein.

Eine Beobachtung der Erstarrungsfront am Ende der Schmelzzone 20 kann für eine Überwachung von Fehlern, die mit der Erstarrung des Materials zusammenhängen, von Bedeutung sein. Beispielsweise können Fehler hinsichtlich der Oberflächenrauhigkeit, der Nahtüberhöhung, sowie hinsichtlich Löcher oder Oberflächenporen bestehen.

Derartige Bearbeitungsfehler entstehen bei der Erstarrung des Materials im Schmelzbad des Bearbeitungsprozesses. Diese Fehler werden zwar grundsätzlich innerhalb der direkten Wechselwirkungszone zwischen dem Laserstrahl 2 und dem Werkstück 8 erzeugt, können dort in der Regel aber nicht beobachtet werden. Insofern ist die simultane Beobachtung der Schmelzzone 20 oder bestimmter Bildausschnitte der Schmelzzone 20 von großer Bedeutung.

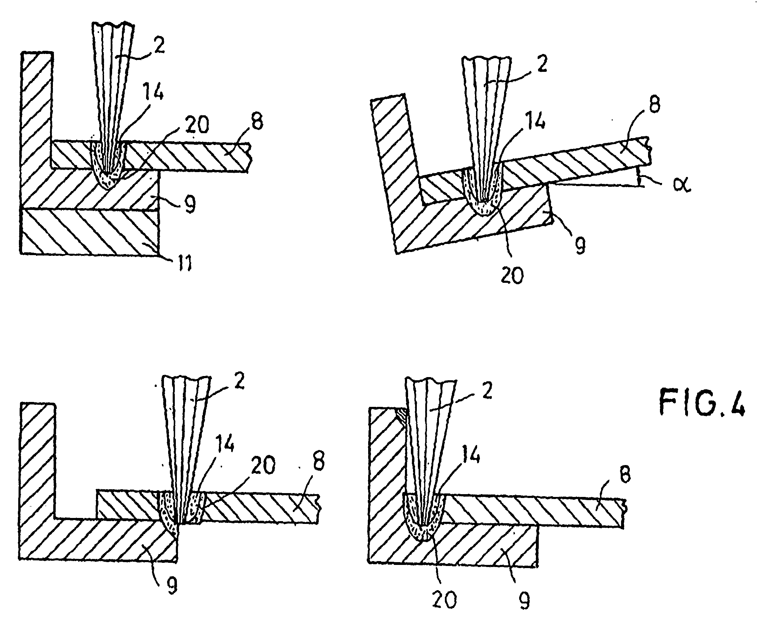

In Fig. 2 sind verschiedene Bildausschnitte 23 bis 30 dargestellt, die dazu dienen, unterschiedliche Prozeßparameter des Bearbeitungsprozesses zu überwachen. Beispielsweise dient der Bildausschnitt 27 zu einer Überwachung von Fehlern aus der Nahtvorbereitung. In diesem Fall kann die Beobachtung auf den Bildausschnitt 25 beschränkt werden. Um eine schnelle Online-Überwachung zu ermöglichen, werden nur die Pixel aus den entsprechend ausgewählten Bereichen mit möglichst einfachen Algorithmen analysiert, wie beispielsweise die Gesamtintensität des Bereiches oder die Differenz in der Intensität zwischen zwei Pixeln. Mit den Bildausschnitten 26 und 28 kann die Eindringtiefe des Laserstrahls überwacht werden. Mit dem Bildausschnitt 28 kann eine erhebliche Datenreduktion durchgeführt werden, indem beispielsweise eine Pixelreihe quer zur Bearbeitungsrichtung im Bereich der Dampfkapillaren 14 den Dampfkapillarbereich überwacht. Mit dem Bildausschnitt 24 kann ein Positionierungsfehler, wie er aus Fig. 4 rechts unten ersichtlich ist, überwacht werden.

Mit dem Bildausschnitt 30 ist die Überwachung der Oberflächentopographie der soeben hinter der Schmelzzone 20 erstarrten Bearbeitungszone möglich.

Mit dem Bildausschnitt 23 ist beispielsweise die Nahtverfolgung möglich, so daß der Bearbeitungsprozeß komplizierten Konturen folgen kann, indem eine vorgegebene Bahn abgetastet wird und der Laserstrahl 2 entsprechend gesteuert wird.

Mit dem Bildausschnitt 29, der mit dem Bildausschnitt 28 deckungsgleich sein kann, aber auch unter einem Winkel zu dem Bildausschnitt 28 verlaufen könnte, kann die Fokusposition des Laserstrahls überwacht werden. Hierzu wird ebenfalls ein schmaler Bildausschnitt ausgewählt, der sich quer durch die Dampfkapillare 14 erstreckt.

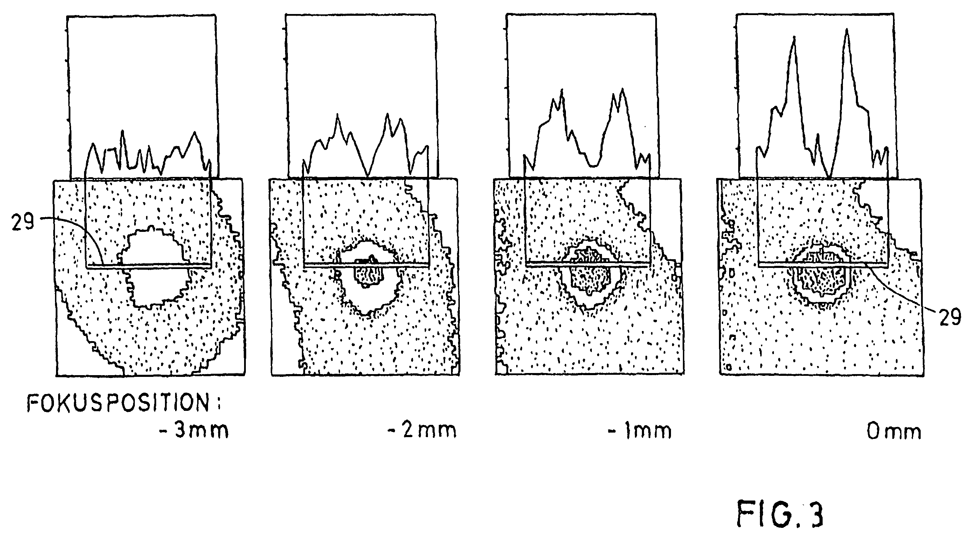

Fig. 3 zeigt vier unterschiedliche Fokuspositionen und oberhalb der bildlichen Darstellungen sind die Meßsignale über die Länge des Bildauschnittes 29 dargestellt. Dabei wird die erste Ableitung der Meßsignalwerte zur Beurteilung der Fokuslage herangezogen, also letztlich die Änderungsrate der Lichtintensität längs des Bildausschnitts 29. Das rechte Bild in Fig. 3 zeigt die optimale Fokusposition, die durch zwei ausgeprägte Maximalwerte gekennzeichnet ist. Überwacht wird dabei das Erreichen eines Maximalwertes.

Fig. 4 zeigt vier Anwendungsbeispiele für das beschriebene Verfahren. Das Bild links oben in Fig. 4 zeigt die korrekte Position zwischen zwei zu verschweißenden Werkstücken 8,9, wobei unterhalb des zweiten Werkstücks 9 ein drittes hitzeempfindliches Teil 11 angeordnet ist. In diesem Fall kommt es darauf an, die Eindringtiefe des Laserlichtstrahls 2 exakt zu kontrollieren. Das Bild rechts oben in Fig. 4 zeigt einen Fehler der Nahtvorbereitung, bei dem die miteinander zu verbindenden Werkstücke 8 und 9 unter einem Winkel a zur Achse des Laserlichtstrahls 2 verlaufen. In diesem Fall kann mit der Überwachung der Fokusposition leicht festgestellt werden, daß die Fokuslage sich verändert hat und somit offensichtlich ein Einspannfehler hinsichtlich der Werkstücke 8,9 vorliegt.

Das Bild unten links in Fig. 4 zeigt einen ungewollten Versatz zwischen dem ersten Werkstück 8 und dem zweiten Werkstück 9, so daß es in der Bearbeitungszone zu einer ungewollten Durchschweißung kommen kann. Ein solcher Bearbeitungsfehler kann beispielsweise mit dem Bildausschnitt 27 überwacht werden.

Die Abbildung rechts unten in Fig. 4 zeigt einen Bearbeitungsfehler, bei dem der Laserlichtstrahl unbeabsichtigt das zweite Werkstück 9 berührt. Ein derartiger Bearbeitungsfehler kann mit dem in Fig. 2 gezeigten Bildausschnitt 24 überwacht werden.

## Patentansprüche

1. Verfahren zur Messung von Prozeßparametern eines Materialbearbeitungsprozesses mit einem auf eine Bearbeitungszone eines Werkstücks (8) fokussierten Hochenergiestrahl (2), insbesondere Laserstrahl, durch Messen der Lichtintensität koaxial zur Hochenergiestrahlung in der Bearbeitungszone im Bereich einer von dem Hochenergiestrahl (2) erzeugten Dampfkapillaren (14) mittels eines optischen Sensors (10), der ein Bildfeld abtastet und dessen Meßsignale einer Auswerteeinrichtung (18) zugeführt werden, wobei Meßsignale von Ausschnitten des Bildfeldes im Bereich der Dampfkapillaren (14) und zumindest auch im Bereich der die Dampfkapillare (14) umgebenden Schmelzzone (20) simultan der Auswerteeinrichtung (18) zugeführt werden,
**dadurch gekennzeichnet,**
**daß** in dem von dem optischen Sensor (10) mit einem Dynamikbereich von über 70 dB erfaßten Bildfeld unterschiedliche Bildausschnitte (24 bis 29) frei wählbar festgelegt werden, und daß ausschließlich die Meßsignale dieser Bildausschnitte zur simultanen Bestimmung unterschiedlicher zu überwachender Prozeßparameter verwertet werden.

2. Verfahren nach Anspruch 1, **dadurch gekennzeichnet, daß** die Meßsignale von Bildausschnitten (27) im Bereich der Schmelzzone (20) vor oder seitlich der Dampfkapillaren (14) zur Überwachung von Nahtvorbereitungsfehlern verwendet werden.

3. Verfahren nach einem der Ansprüche 1 oder 2, **dadurch gekennzeichnet, daß** die Meßsignale eines Bildausschnittes (23) in Arbeitsrichtung vor der Bearbeitungszone in der Schmelzzone (20) oder in dem der Schmelzzone (20) vorgelagerten Randbereich zur Messung der Nahtlage und zur Steuerung der Laserposition oder der Werkstückposition verwendet werden.

4. Verfahren nach einem der Ansprüche 1 bis 3, **dadurch gekennzeichnet, daß** die Eindringtiefe des Hochenergiestrahls (2) aus einer reduzierten Anzahl von Bildpixeln eines Bildausschnitts.(28) im Zentrum der Dampfkapillaren (14) ermittelt wird.

5. Verfahren nach einem der Ansprüche 1 bis 4, **dadurch gekennzeichnet, daß** die Meßsignale eines Bildausschnittes (30) in Bearbeitungsrichtung hinter der Dampfkapillaren (14) in der Schmelzzone (20) und/oder in Bearbeitungsrichtung hinter der Schmelzzone (20) zur Messung der Oberflächentopographie des bearbeiteten Werkstücks (6) verwendet werden.

6. Verfahren nach einem der Ansprüche 1 bis 5, **dadurch gekennzeichnet, daß** die Meßdaten aus den unterschiedlichen Bildausschnitten (23 bis 30) einer Datenreduktion zugeführt werden.

7. Verfahren nach einem der Ansprüche 1 bis 6, **dadurch gekennzeichnet, daß** Licht vorbestimmter Wellenlängen in dem Strahlengang zum optischen Sensor (10) ausgefiltert wird.

8. Verfahren nach einem der Ansprüche 1 bis 7, **dadurch gekennzeichnet, daß** als optischer Sensor (10) eine CMOS-Kamera verwendet wird.

9. Verfahren nach einem der Ansprüche 1 bis 8, **dadurch gekennzeichnet, daß** simultan durch Messung der Lichtintensität in der Dampfkapillaren (14) Kapillarkenngrößen und durch Messung der Lichtintensität mindestens einer ausgewählter Stelle der Schmelzzone (20) Kenngrößen des Schmelzbades ermittelt werden, wobei eine Steuerung des Bearbeitungsprozesses in Abhängigkeit von den ermittelten Kapillarkenngrößen und den ermittelten Kenngrößen des Schmelzbades erfolgt.

10. Verfahren nach einem der Ansprüche 1 bis 9, **dadurch gekennzeichnet, daß** ein optischer Sensor (10) mit einem Dynamikbereich über 100 dB verwendet wird.

11. Verfahren nach einem der Ansprüche 1 bis 10, **dadurch gekennzeichnet, daß** die Fokussierposition des Hochenergiestrahls (2) durch Messung der Lichtintensitätsänderung in einem linienförmigen oder rechteckförmigen Bildausschnitt (29) bestimmt wird, der durch die Dampfkapillare (14) und die benachbarten Schmelzzonen (20) verläuft.

12. Verfahren nach einem der Ansprüche 1 bis 11, **dadurch gekennzeichnet, daß** die Meßsignale von ausgewählten Bildpunkten zur Überwachung, Prozeßsteuerung oder Prozeßregelung verwendet werden.

13. Vorrichtung zur Messung von Prozeßparametern eines Materialbearbeitungsprozesses, mit einer Einrichtung zum Erzeugen eines Hochenergiestrahls (2), z.B. eines Laserstrahls, mit einer Fokussiereinrichtung (6) zum Fokussieren des Hochenergiestrahls (2) auf eine Bearbeitungszone eines Werkstücks (8) und mit einem optischen Sensor (10) zur Messung der Lichtintensität der in der Bearbeitungszone entstehenden Dampfkapillaren, wobei der Sensor (10) koaxial zur Richtung des Hochenergiestrahls (2) auf die Bearbeitungszone des Werkstücks (8) fokussiert ist, sowie mit einer Auswerteeinrichtung (18) zur Auswertung der von dem optischen Sensor (10) gelieferten Meßsignale des abgetasteten Bildfeldes, wobei der optische Sensor (10) Meßsignale aus dem Bereich der Dampfkapillaren (14) und mindestens auch einen Bereich der die Dampfkapillare (14) umgebenden Schmelzzone (20) an die Auswerteeinrichtung (18) überträgt,
**dadurch gekennzeichnet,**
**daß** der optische Sensor (10) einen Dynamikbereich von über 70 dB aufweist, und
**daß** die Auswerteeinrichtung (18) nur Meßsignale von frei wählbaren Bildausschnitten des Bildfeldes erhält, die außer den Bereich der Dampfkapillaren (14) mindestens einen Bereich der die Dampfkapillare (14) umgebenden Schmelzzone (20) erfassen.

14. Vorrichtung nach Anspruch 13, **dadurch gekennzeichnet, daß** der optische Sensor (10) aus einer CMOS-Kamera besteht.

15. Vorrichtung nach einem der Ansprüche 13 bis 14, **dadurch gekennzeichnet, daß** die Auswerteeinrichtung (18) die Bildsignale in mehreren unterschiedlichen Bildausschnitten (24 bis 30) des von dem Sensor (10) abgetasteten Bildfeldes im Hinblick auf vorbestimmte Prozeßparameter auswertet.

16. Vorrichtung nach einem der Ansprüche 13 bis 15, **dadurch gekennzeichnet, daß** die Auswerteeinrichtung (18) im Bereich der Dampfkapillaren (14) eine vorbestimmte reduzierte Anzahl von in der Nähe des Hochenergiestrahls (2) angeordneten Bildpunkten zwecks Messung der Eindringtiefe des Hochenergiestrahls erfaßt.

17. Vorrichtung nach einem der Ansprüche 15 oder 16, **dadurch gekennzeichnet, daß** die Auswerteeinrichtung (18) die Meßsignale in Bildausschnitten (24,27) im Bereich des Schmelzbades (20) in Bearbeitungsrichtung hinter und seitlich der Dampfkapillaren (14) zur Messung von Nahtvorbereitungsfehlern auswertet.

18. Vorrichtung nach einem der Ansprüche 15 bis 17, **dadurch gekennzeichnet, daß** die Auswerteeinrichtung (18) die Meßsignale in Bildausschnitten in Bearbeitungsrichtung hinter der Dampfkapillaren (14) in der Schmelzzone oder in Bearbeitungsrichtung hinter der Schmelzzone (20) zur Messung der Oberflächentopographie auswertet.

19. Vorrichtung nach einem der Ansprüche 15 bis 18, **dadurch gekennzeichnet, daß** die Auswerteeinrichtung (18) die Meßsignale aus einem sich linien- oder rechteckförmig durch die Dampfkapillare (14) und die benachbarte Schmelzzone (20) erstreckenden Bildausschnitt (29) zur Bestimmung der Fokussierposition des Hochenergiestrahls (2) auswertet.

20. Vorrichtung nach einem der Ansprüche 13 bis 19, **dadurch gekennzeichnet, daß** das im Strahlengang zu dem optischen Sensor (10) ein Filter (15) angeordnet ist, mit dem vorbestimmte Wellenlängen des aufgenommen Lichtes ausblendbar sind.

## Claims

1. Method for measuring process parameters of a material machining process using a high energy beam (2), in particular a laser beam, focused onto a machining zone of a workpiece (8), by measuring, with the aid of an optical sensor (10), the light intensity coaxially to the high energy radiation in the machining zone in the area of a vapor capillary (14) produced by the high energy beam (2), the optical sensor (10) sensing an image field and transmitting the measuring signals to an evaluation means (18), wherein measuring signals of sections of the image field showing the area of the vapor capillary (14) and at least also the area of the melting zone (20) surrounding the vapor capillary (14) are simultaneously transmitted to the evaluation means (18),
**characterized in that**
in the image field sensed by the optical sensor (10), which has a dynamic range of more than 70 dB, different image sections (24 to 29) are freely selectable, and exclusively the measuring signals of these image sections are used for simultaneous determination of different process parameters to be monitored.

2. Method according to claim 1, **characterized in that** the measuring signals of image sections (27) showing the area of the melting zone (20) in front of or at the side of the vapor capillary (14) are used for detecting defects occurring during weld preparation.

3. Method according to claim 1 or 2, **characterized in that** the measuring signals of an image section (23) showing the melting zone (20) upstream of the machining zone, as seen in the machining direction, or the border area upstream of the melting zone (20) are used for measuring the weld location and for controlling the laser position or the workpiece position.

4. Method according to one of claims 1 to 3, **characterized in that** the penetration depth of the high energy beam (2) is determined on the basis of a reduced number of pixels of an image section (28) showing the center of the vapor capillary (14).

5. Method according to one of claims 1 to 4, **characterized in that** the measuring signals of an image section (30) taken in the melting zone (20) downstream of the vapor capillary (14), as seen in the machining direction, and/or downstream of the melting zone (20), as seen in the machining direction, are used for measuring the surface topography of the machined workpiece (8).

6. Method according to one of claims 1 to 5, **characterized in that** the measuring data of the different image sections (23 to 30) are subjected to data reduction.

7. Method according to one of claims 1 to 6, **characterized in that** light of certain wavelengths in the beam path to the optical sensor (10) is filtered.

8. Method according to one of claims 1 to 7, **characterized in that** a CMOS camera is used as optical sensor (10).

9. Method according to one of claims 1 to 8, **characterized in that** by measuring the light intensity in the vapor capillary (14) capillary parameters, and by measuring the light intensity at at least one selected place of the melting zone (20) fused pool crater parameters are simultaneously determined, with control of the machining process being carried out as a function of the determined capillary parameters and the determined fused pool crater parameters.

10. Method according to one of claims 1 to 9, **characterized in that** an optical sensor (10) having a dynamic range of more than 100 dB is used.

11. Method according to one of claims 1 to 10, **characterized in that** the focal position of the high energy beam (2) is determined by measuring the change in light intensity in a linear or rectangular image section (29) extending through the vapor capillary (14) and the neighboring melting zones (20).

12. Method according to one of claims 1 to 11, **characterized in that** the measuring signals of selected pixels are used for monitoring or process control purposes.

13. Device for measuring process parameters of a material machining process comprising a means for producing a high energy beam (2), e. g. a laser beam, a focusing means (6) for focusing the high energy beam (2) onto a machining zone of a workpiece (8), and an optical sensor (10) for measuring the light intensity of the vapor capillary produced in the machining zone, the sensor (10) being focused coaxially to the direction of the high energy beam (2) onto the machining zone of the workpiece (8), and an evaluation means (18) for evaluating the measuring signals of the scanned image field supplied by the optical sensor (10), wherein the optical sensor (10) transmits to the evaluation means (18) measuring signals from the area of the vapor capillary (14) and at least also an area of the melting zone (20) surrounding the vapor capillary (14),
**characterized in that**
the optical sensor (10) has a dynamic range of more than 70 dB, and the evaluation means (18) receives only measuring signals of freely selectable image sections of the image field covering, in addition to the area of the vapor capillary (14), at least an area of the melting zone (20) surrounding the vapor capillary (14).

14. Device according to claim 13, **characterized in that** the optical sensor (10) is a CMOS camera.

15. Device according to one of claims 13 to 14, **characterized in that** the evaluation means (18) evaluates the image signals of a plurality of different image sections (24 to 30) of the image field scanned by the sensor (10) with regard to predetermined process parameters.

16. Device according to one of claims 13 to 15, **characterized in that** in the area of the vapor capillary (14) the evaluation means (18) senses, for the purpose of measuring the penetration depth of the high energy beam, a predetermined reduced number of pixels located near the high energy beam (2).

17. Device according to one of claims 15 or 16, **characterized in that** the evaluation means (18) evaluates the measuring signals of image sections (24,27) in the area of the melting zone (20) downstream of and at the side of the vapor capillary (14), as seen in the machining direction, for the purpose of measuring defects occurring during weld preparation.

18. Device according to one of claims 15 to 17, **characterized in that** the evaluation means (18) evaluates the measuring signals of image sections taken in the melting zone (20) downstream of the vapor capillary (14), as seen in the machining direction, or downstream of the melting zone (20), as seen in the machining direction, for the purpose of measuring the surface topography.

19. Device according to one of claims 15 to 18, **characterized in that** the evaluation means (18) evaluates the measuring signals of an image section (29) extending linearly or rectangularly through the vapor capillary (14) and the neighboring melting zone (20) for determining the focal position of the high energy beam (2).

20. Device according to one of claims 13 to 19, **characterized in that** a filter (15) is arranged in the beam path to the optical sensor (10) by means of which filter (15) specific wavelengths of the light received can be blocked.

## Revendications

1. Procédé de mesure de paramètres d'un processus de traitement de matériau avec un faisceau très énergétique (2), en particulier un faisceau laser, focalisé sur une zone de traitement d'une pièce (8), en mesurant l'intensité lumineuse coaxialement à la direction du faisceau très énergétique dans la zone de traitement au niveau d'un capillaire de vapeur (14), généré par le faisceau très énergétique (2), au moyen d'un capteur optique (10) qui explore un champ d'image et dont les signaux de mesure sont amenés à un dispositif d'exploitation (18),
les signaux de mesure de portions du champ d'image, au niveau des capillaires de vapeur (14) et au moins également au niveau de la zone de fusion (20) entourant les capillaires de vapeur (14), étant amenés simultanément au dispositif d'exploitation (18),
**caractérisé en ce que**, dans le champ d'image détecté par le capteur optique (10) avec une plage dynamique de plus de 70 dB, on détermine avec un choix libre différentes portions d'image (24 à 29), et **en ce que** on exploite exclusivement les signaux de mesure de ces portions d'image pour la détermination simultanée de différents paramètres de processus à surveiller.

2. Procédé selon la revendication 1, **caractérisé en ce que** les signaux de mesure de portions d'image (27), au niveau de la zone de fusion (20) en avant ou sur le côté des capillaires de vapeur (14), sont utilisés pour la surveillance d'erreurs de préparation de soudure.

3. Procédé selon l'une des revendications 1 ou 2, **caractérisé en ce que** les signaux de mesure d'une portion d'image (23), en avant de la zone de traitement dans la zone de fusion (20) par référence au sens de travail ou dans la région de bordure située en avant de la zone de fusion (20), sont utilisés pour mesurer la position de la soudure et pour commander la position du laser ou la position de la pièce.

4. Procédé selon l'une des revendications 1 à 3, **caractérisé en ce que** la profondeur de pénétration du faisceau très énergétique (2) est déterminée à partir d'un nombre réduit de pixels d'image d'une portion d'image (28) au centre des capillaires de vapeur (14).

5. Procédé selon l'une des revendications 1 à 4, **caractérisé en ce que** les signaux de mesure d'une portion d'image (30), en arrière des capillaires de vapeur (14) dans la zone de fusion (20) par référence au sens de traitement et/ou en arrière de la zone de fusion (20) par référence au sens de traitement, sont utilisés pour mesurer la topographie de surface de la pièce traitée (6) .

6. Procédé selon l'une des revendications 1 à 5, **caractérisé en ce que** les données de mesure provenant des différente portions d'image (23 à 30) sont fournies à un dispositif de réduction de données.

7. Procédé selon l'une des revendications 1 à 6, **caractérisé en ce que** l'on élimine par filtrage une lumière de longueurs d'onde prédéterminées dans le trajet des rayons menant au capteur optique (10).

8. Procédé selon l'une des revendications 1 à 7, **caractérisé en ce qu'**une caméra CMOS est utilisée comme capteur optique (10).

9. Procédé selon l'une des revendications 1 à 8, **caractérisé en ce que** l'on détermine simultanément des grandeurs caractéristiques de capillaires en mesurant l'intensité lumineuse dans les capillaires de vapeur (14) et des grandeurs caractéristiques du bain de fusion en mesurant l'intensité lumineuse au moins à un emplacement choisi de la zone de fusion (20), une commande du processus de traitement étant effectuée en fonction des grandeurs caractéristiques déterminées de capillaires et des grandeurs caractéristiques déterminées du bain de fusion.

10. Procédé selon l'une des revendications 1 à 9 **caractérisé en ce que** l'on utilise un capteur optique (10) ayant une plage dynamique de plus de 100 dB.

11. Procédé selon l'une des revendications 1 à 10, **caractérisé en ce que** la position de focalisation du faisceau très énergétique (2) est déterminée en mesurant la variation d'intensité lumineuse dans une portion d'image (29), rectiligne ou rectangulaire, qui s'étend à travers les capillaires de vapeur (14) et la zone de fusion adjacente (20).

12. Procédé selon l'une des revendications 1 à 11, **caractérisé en ce que** les signaux de mesure de points d'image choisis sont utilisés pour effectuer une surveillance, une commande de processus ou une régulation de processus.

13. Dispositif de mesure de paramètres d'un processus de traitement de matériau, lequel dispositif comporte
un dispositif pour générer un faisceau très énergétique (2), par exemple un faisceau laser,
un dispositif de focalisation (6) pour focaliser le faisceau très énergétique (2) sur une zone de traitement d'une pièce (8), et
un capteur optique (10) pour mesurer l'intensité lumineuse des capillaires de vapeur générés dans la zone de traitement, le capteur (10) étant focalisé coaxialement à la direction du faisceau très énergétique (2) sur la zone de traitement de la pièce (10),
ainsi qu'un dispositif d'exploitation (18) pour exploiter les signaux de mesure du champ d'image exploré qui sont fournis par le capteur optique (10), le capteur optique (10) transmettant au dispositif d'exploitation (18) des signaux de mesure provenant de la région des capillaires de vapeur (14) et au moins également d'une région de la zone de fusion (20) entourant les capillaires de vapeur (14),
**caractérisé en ce que**
le capteur optique (10) présente une plage dynamique de plus de 70 dB, et
le dispositif d'exploitation (18) ne reçoit que les signaux de mesure de portions d'image, pouvant être librement choisies, du champ d'image, lesquels signaux de mesure saisissent en dehors de la région des capillaires de vapeur (14) au moins une région de la zone de fusion (20) entourant les capillaires de vapeur (14).

14. Dispositif selon la revendication 13, **caractérisé en ce que** le capteur optique (10) est constitué par une caméra CMOS.

15. Dispositif selon l'une des revendications 13 à 14, **caractérisé en ce que** le dispositif d'exploitation (18) exploite, relativement à des paramètres de processus prédéterminés, les signaux d'image dans plusieurs portions d'image différentes (24 à 30) du champ d'image exploré par le capteur (10).

16. Dispositif selon l'une des revendications 13 à 15, **caractérisé en ce que** le dispositif d'exploitation (18) saisit dans la région des capillaires de vapeur (14) un nombre réduit prédéterminé de points d'image disposés à proximité du faisceau très énergétique (2) en vue de mesurer la profondeur de pénétration du faisceau très énergétique.

17. Dispositif selon l'une des revendications 15 ou 16, **caractérisé en ce que** le dispositif d'exploitation (18) exploite les signaux de mesure dans des portions d'image (24, 27) au niveau du bain de fusion (20) en arrière et sur le côté des capillaires de vapeur (14), par référence au sens de traitement, afin de mesurer des erreurs de préparation de soudure.

18. Dispositif selon l'une des revendications 15 à 17, **caractérisé en ce que** le dispositif d'exploitation (18) exploite les signaux de mesure dans des portions d'image en arrière des capillaires de vapeur (14) dans le bain de fusion, par référence au sens de traitement, ou en arrière de la zone de fusion (20), par référence au sens de traitement, afin de mesurer la topographie de surface.

19. Dispositif selon l'une des revendications 15 à 18, **caractérisé en ce que** le dispositif d'exploitation (18) exploite les signaux de mesure provenant d'une portion d'image (29) s'étendant de façon rectiligne ou rectangulaire à travers les capillaires de vapeur (14) et la zone de fusion adjacente (20) afin de déterminer la position de focalisation du faisceau très énergétique (2).

20. Dispositif selon l'une des revendications 13 à 19, **caractérisé en ce qu'**un filtre (15), permettant de supprimer des longueurs d'onde prédéterminées de la lumière reçue, est placé dans le trajet des rayons menant au capteur optique (10).
